# EUROPEAN PATENT SPECIFICATION

(11) **EP 1 424 220 B1**
(45) Date of publication and mention of the grant of the patent: **21.05.2008**
(21) Application number: 03104307.8
(22) Date of filing: 21.11.2003
(51) Int. Cl.: B60C 11/11

(54) **Agricultural tire**
Landwirtschaftsreifen
Bandage pneumatique agricole

(30) Priority: 26.11.2002 US 305758
(43) Date of publication of application: 02.06.2004
(73) Proprietor: THE GOODYEAR TIRE & RUBBER COMPANY, Akron, OH 44316-0001 (US)
(72) Inventor: BONKO, Mark Leonard, 44685, Uniontown / Ohio (US)
(74) Representative: Kutsch, Bernd

(56) References cited:
- EP-A- 0 600 265
- FR-A- 1 063 458
- US-A- 2 065 697
- US-A- 5 411 067
- US-B1- 6 209 602

## Description

### Field of the Invention

This invention relates to agricultural tires, more specifically to a tire designed for very large combines used in crop harvesting.

### Background of the Invention

Farm times have evolved over the years in an attempt to maximize tractor efficiency.

Large combines have fuel tanks of up to 680 liters (180 gallons) and can operate for 14 to 16 hours straight before needing to refuel. These very large pieces of equipment such as combines weigh a considerable amount. For that reason the tires have to have a very strong carcass construction and tread lug design to carry the loads.

Historically, combines have a pair of small steering tires in the rear of the vehicle and larger drive axle tires in the front of the vehicle just aft of the cantilevered picker unit. Large combines most generally have four large drive axle tires. These drive axle tires propel the vehicle and push the cornheads and other crop harvesting headers into the crop as it is cut and harvested.

Traction performance must remain high and for that reason these tires have employed tractor tires having conventional directional tread patterns which provide maximum forward traction.

Combines weighing 4535 to 6800 kg (10,000 to 15,000 pounds) used treads having long bars that were arranged in two rows, extending from each tread shoulder crossing the centerline of the tire. These tires limited the number of lugs or bars that could come into ground contact with the vehicle.

A later generation of tires for the drive axle was developed that employed a combination of long bars and short bars in a chevron pattern in an effort to get more lugs in the footprint. Such a tire has been successfully used in the combine vehicles and is described in US-A- 4,534,392. As the combine's gross vehicle weight started to exceed 9070 kg (20,000 pounds) the long bar/short bar tread pattern was becoming overstressed. In particular, while the increased number of lugs increased the leading edges this meant more driving torque could be transmitted to the vehicle. The torque generation is sufficiently large to cause a bending of the short lugs. The short lugs clearly assisted in providing more traction but they could under very high loads bend and roll over.

It is an object of the present invention to maintain the high tractive forces of the long bar/short bar tread pattern while keeping high tread lug contact area in the tire's footprint.

It is a further objective to improve the tread bar durability by employing a new tread pattern having stronger tread lugs.

FR-A- 1063458 discloses a tire according to the preamble of claim 1.

US-A- 5,411,067 discloses a tire for use on agricultural tractors with lugs with an enlarged lug head.

US-A- 2,065,697 discloses a tire with high traction on snow having a tread with pockets being inclined with regard to the circumferential direction of the tire.

### Summary of the Invention

A drive axle tire especially for use on combines is disclosed. The tire has a carcass, a tread and may have a reinforcing belt or breaker structure. The carcass has at least one cord reinforced ply. The belt or breaker structure has a plurality of crossed belt or breaker layers.

The tread has a plurality of tread lugs extending radially outwardly from an inner surface of the tread called the non-skid surface to a radially outer top lug surface. The tread lugs are arranged in two circumferentially offset rows, a first row extending from a first shoulder toward the centerplane of the tread but not crossing the centerplane at the top lug surface. The second row extends from an opposite shoulder toward the centerplane of the tread but not crossing said centerplane at the top lug surface. This enhances wet soil mobility and unobstructed soil penetration. Each tread lug of said first row is similar in shape and is a mirror image of the tread lugs of the second row. Alternatively, the lugs could cross the centerplane in dry soil combine service.

Each lug has a minimum width (I_{w}) as measured between a leading edge and a trailing edge of the lug, a lug length (Iₗ) as measured along a centerline of the lug midway between the leading edge and the trailing edge, an average radial height (Iₕ) as measured from the non-skid surface to the radially outermost surface of the lug.

The minimum lug width (I_{w}) is greater than or equal to the average radial height (Iₕ) and the circumferential distance between the leading edge and the trailing edge of adjacent lugs within each row is less than or equal to 3 times (I_{w}), preferably of from 2-3 times (I_{w}), more preferably of from 2.4-2.7 times (I_{w}).

Each lug head has an axially inner end. At the axially inner end each lug preferably has an enlarged lug head projecting from the leading edge.

Preferably, each lug has a circumferentially extending axially outer end and an inclined axially inner end oriented at an angle θ relative to the centerplane, θ being in the range of 30° to 60°. Preferably, a line K, drawn between midpoints of the axially outer end and the axially inner end, is oriented at an angle β of less than 35° to the axial direction. More preferably, the line K is oriented at an angle β of from 30°-32°.

### Brief Description of the Drawings

The invention will be described by way of example and with reference to the accompanying drawings in which:
Fig. 1 is a perspective view of the preferred tire according to the present invention.
Fig. 2 is a plan view of the preferred tire according to the present invention.
Fig. 3 is a fragmentary view of the tread portion of the preferred tire according to the present invention.
Fig. 4 is a cross-sectional view of the preferred tire taken along lines 5-5 of Fig. 2.
Fig. 5 is a plan view of a portion of the contact patch of the preferred tire according to the present invention.

### Definitions

"Aspect ratio" of the tire means the ratio of its section height (SH) to its section width (SW) multiplied by 100% for expression as a percentage.

"Belt or breaker reinforcing structure" means at least two layers of plies of parallel cords, woven or unwoven, underlying the tread, unanchored to the bead, and having both left and right cord angles in the range from 17° to 33° with respect to the equatorial plane of the tire.

"Bias-ply tire" means a tire having bias angle carcass, the angle of the cords being 25° to 50° relative to the equatorial plane of the tire. Each adjacent ply has cords equal but oppositely oriented.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Lateral edge" means the axially outermost edge of the tread as defined by a plane parallel to the equatorial plane and intersecting the outer ends of the axially outermost traction lugs at the radial height of the inner tread surface.

"Leading" refers to a portion or part of the tread that contacts the ground first, with respect to a series of such parts or portions, during rotation of the tire in the direction of travel.

"Net-to-gross ratio" means the ratio of the normally loaded and normally inflated tire tread rubber that makes contact with a hard flat surface, divided by the area of the tread, including non-contacting portions such as grooves as measured around the entire circumference of the tire.

"Normal load" refers to the specific design inflation pressure and load assigned by the appropriate standards organization for the service condition for the tire.

"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Trailing" refers to a portion or part of the tread that contacts the ground last, with respect to a series of such parts or portions during rotation of the tire in the direction of travel.

"Tread width" means the arc length of the tread surface in the axial direction, that is, in a plane passing through the axis of rotation of the tire.

### Detailed Description of the Invention

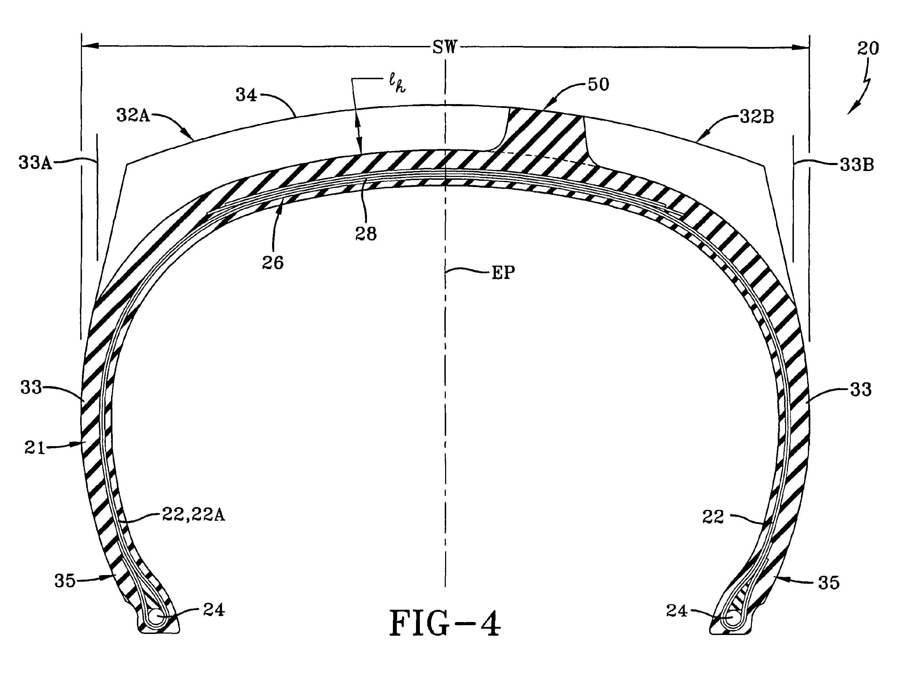

Now referring to Fig. 4, a tire is shown in cross-section view generally as reference numeral 20. The pneumatic tire 20 has a carcass 21 having one or more carcass plies 22 extending circumferentially about the axis of rotation of the tire 20. The carcass plies 22 are anchored around a pair of substantially inextensible annular beads 24. A belt or breaker reinforcing structure 26 comprising one or more belt or breaker plies 28 can be disposed radially outwardly from the carcass plies 22. The belt or breaker plies 28 provide reinforcement for the crown region of the tire 20. A circumferentially extending tread portion 32 is located radially outwardly of the belt reinforcing structure 26.

A sidewall portion 33 extends radially inwardly from each axial or lateral tread edge 33A, 33B of the tread to an annular bead portion 35 having the beads 24 located therein.

The carcass plies 22 preferably have textile or synthetic cords 22A reinforcing the plies 22. The cords 22A are preferably oriented radially in a single ply tire or if multiple plies are used then bias cords are employed. Most preferably, the cords 22A are made of polyester or nylon material. Typically, the tire 20 may have two to up to ten plies 22, each construction increasing in load carry capability as a function of the number of plies.

The belt or breaker reinforcement structure 26 if used preferably includes at least two belts 28 reinforced by synthetic cords of rayon or aramid.

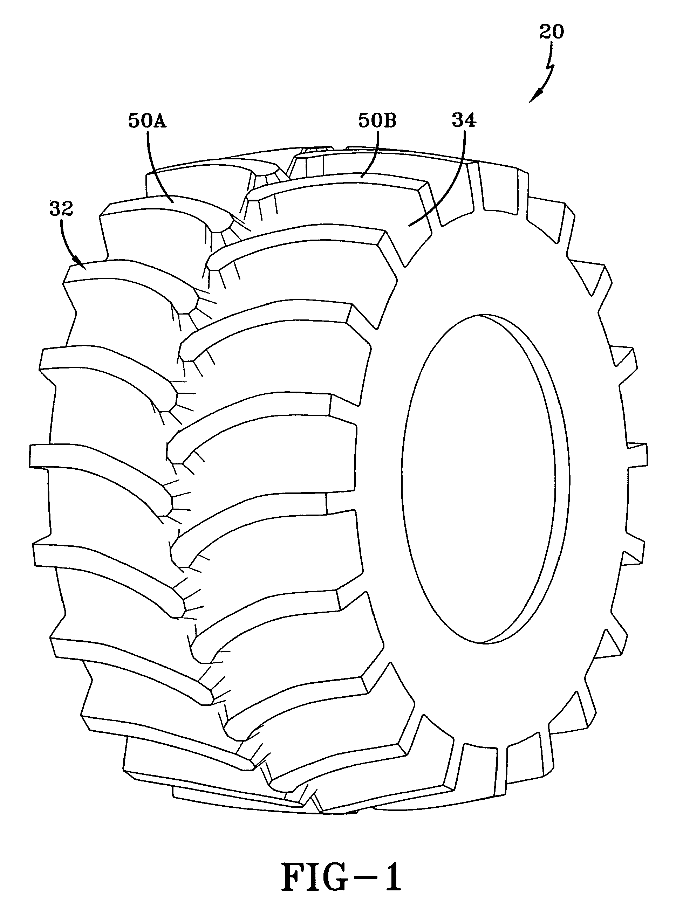

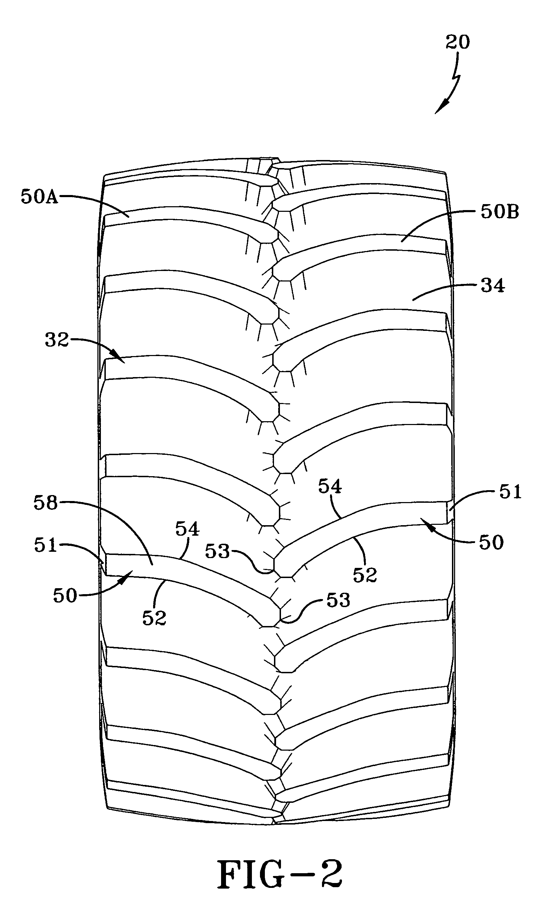

Now referring to Figs. 1-5, a tire 20 according to the present invention is illustrated. The tire 20 according to the present invention has a unique tread 32. The tread 32 has a first lateral tread edge 33A and a second lateral tread edge 33B. Disposed between the tread edges 33A, 33B is an inner tread 34 and a plurality of lugs 50 arranged in two rows 50A and 50B extending radially outwardly from the inner tread 34. The tread 32 is divided into two tread halves 32A and 32B, respectively.

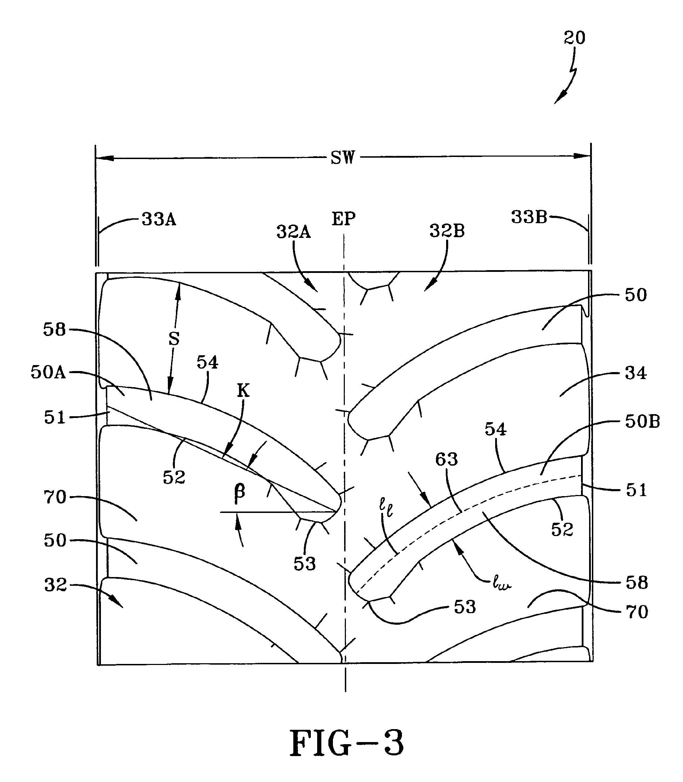

As illustrated in Fig. 3 each lug 50 has a radially outer surface 58, a leading edge 52, trailing edge 54 and a centerline 63 between the leading and trailing edges. Each lug 50 in rows 50A and 50B extends generally axially inwardly from an axially outer end 51 to an axially inner end 53. Each lug 50 intersects the equatorial plane EP along the lug wall of the axially inner end 53 and has an orientation substantially offset circumferentially with the lugs 50 of the opposite row as shown.

As illustrated in the radially outer surface 58 when viewed from the contact patch has a polygonal shape. The surface 58 exhibits the approximate orientation of the lug 50. For purposes of this invention the centerline 63 of the lugs is approximated by a line extending substantially parallel to the leading and trailing edges 52,54 and being generally equidistanced between these edges.

Preferably, the lugs have a length (Iₗ) at least three times their width (I_{w}) whereas block elements have a width greater than one-third the length of the element. A lug for purposes of this invention has preferably a length (Iₗ) at least 10% of the section width (SW) of the tire 20.

The distance along the centerline 63 between the axially outer and inner ends 51,53 defines the length (Iₗ) of the lug 50.

The distance extending substantially perpendicularly between the leading and trailing edges 52,54 of the lug define the lug width (I_{w}). The radial distance extending between the inner tread 34 and the edges 52,54 of the lug 50 defines the radial lug height (Iₕ). Preferably, the ratio of the lug width (I_{w}) to lug radial heights (Iₕ) is equal to or greater than 1.0 over at least 70% of the lug length (Iₗ).

As shown in Figure 4 the tire 20 has a very high net-to-gross ratio when compared to conventional farm tires. This is due in part to the wide surface area 58 of the lug 50 and the very large lug head 55 projecting from the leading edge 52 of the lug 50. Secondarily, by having the lugs 50 at the radial outer surface 58 extending toward but not crossing the equatorial centerplane of the tire 20 and being inclined at an angle β of less than 35° means that many more lugs can be added around the circumference of the tire. When compared to a similar sized conventional long bar farm tire lugs oriented at about 45°, the tire of the present invention adds at least four lugs, six in some size tires.

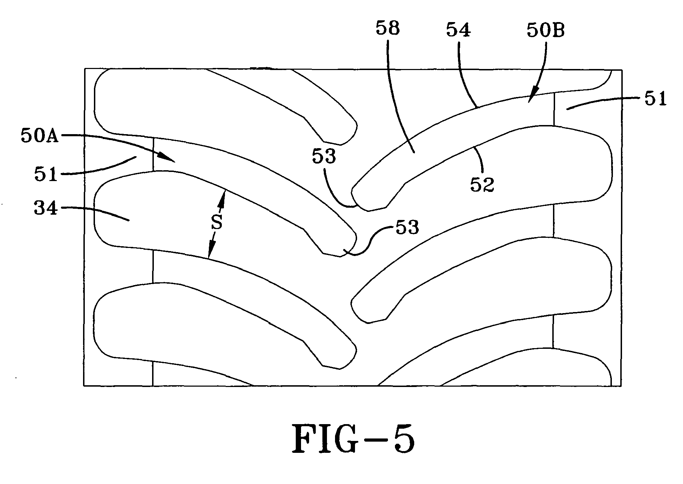

The lugs 50 as shown in Figures 3 and 5 have a line K extending between a midpoint of the axially inner end 53 and a midpoint of the circumferentially extending axially outer end 51. The line K is oriented at an angle β of 35° or less relative to the axial direction, as illustrated 31°.

The spacing S between the adjacent lugs 50 within a row 50A or 50B and the inner tread 34 defines a soil discharge channel 70. Tires designed for good mud traction have the distance between lugs at least 4 times the lug width (I_{w}).

The tire of the present invention has been designed to have this lug spacing distance reduced to less than three times the lug width (I_{w}), as shown 2.6 times. This greatly reduced channel width is possible because farmers avoid harvesting wet crops. Accordingly the stubble and the dry soil conditions enabled the tire 20 of the present invention to be designed with wide closely spaced lugs 50. The resultant net-to-gross ratio falls in the range of 29% to 35%, as illustrated about 29.5%.

The combine tires typically are made in two bias tire sizes, a 24.5-32 (24.5 R 32 for radial) and a 30.5 L-32 (30.5 LR32 for radial) or the metric equivalent thereof. The total number of tread lugs in the 24.5-32 tire is proportional to the 30.5L-32 and in the 30.5L-32 tire fifty lugs are used. This amounts to at least two more lugs than the prior art tires.

## Claims

1. A drive axle tire (20) having a carcass (21) reinforced by at least one cord reinforced ply (22) and a tread (32) having a plurality of tread lugs (50), the tire comprising:
the tread lugs (50) being arranged in two circumferentially offset rows (50A, 50B), a first row (50A) extending from a first shoulder toward the centerplane of the tread (32) but not crossing said centerplane, a second row (50B) extending from an opposite shoulder toward the centerplane of the tread (32) but not crossing said centerplane, each tread lug (50) of said first row (50A) being similar in shape and a mirror image of the tread lugs (50) of the second row (50B); wherein each lug (50) has a minimum width (I_{w}) as measured between a leading edge (52) and a trailing edge (54) of the lug (50), a lug length (I_{w}) as measured along a centerline of the lug (50) midway between the leading edge (52) and the trailing edge (54), and an average radial height (Iₕ) as measured from the non-skid surface to the radially outermost surface of the lug (50) and wherein the minimum lug width (I_{w}) is greater than or equal the average radial height (Iₕ) and the circumferential distance between the leading edge (52) and the trailing edge (54) of adjacent lugs (50) within each row is less than or equal to 3 times (I_{w})**characterized in that** a line (K) drawn between midpoints of the axially outer end (51) and the axially inner end (53) is oriented at an angle (β) of less than 35° to the axial direction.

2. The tire of claim 1 wherein the axially inner end (53) of each lug (50) has an enlarged lug head (55) projecting from the leading edge (52).

3. The tire of claim 1 or 2 wherein each lug (50) has a circumferentially extending axially outer end (51) and an inclined axially inner end (53) oriented at an angle relative to the centerplane, being in the range of 30° to 60°.

4. The tire of claim 1 wherein the line (K) is oriented at an angle (β) of 31°.

5. The tire of at least one of the preceding claims wherein the tire size is 30.5L-32 and the total of lugs (50) number fifty around the circumference of the tire (20).

## Patentansprüche

1. Antriebsachsenreifen (20) mit einer durch mindestens eine kordverstärkte Lage (22) verstärkten Karkasse (21) und einer Lauffläche (32) mit einer Vielzahl von Profilstollen (50), wobei der Reifen umfasst :
dass die Profilstollen (50) in zwei in Umfangsrichtung versetzten Reihen (50A, 50B) angeordnet sind, einer ersten Reihe (50A), die sich von einer ersten Schulter zur Mittelebene der Lauffläche (32) erstreckt, diese Mittelebene jedoch nicht kreuzt, einer zweiten Reihe (50B), die sich von einer gegenüberliegenden Schulter zu der Mittelebene der Lauffläche (32) erstreckt, diese Mittelebene jedoch nicht kreuzt, wobei jeder Profilstollen (50) der ersten Reihe (50A) von gleicher Form und ein Spiegelbild der Profilstollen (50) der zweiten Reihe (50B) ist ; wobei jeder Profilstollen (50) eine Mindestbreite (I_{w}) hat, gemessen zwischen einer Vorderflanke (52) und einer Hinterflanke (54) des Stollens (50), eine Stollenlänge (I_{w}) gemessen entlang einer Mittellinie des Stollens (50) auf halbem Weg zwischen der Vorderflanke (52) und der Hinterflanke (54), und eine durchschnittliche radiale Höhe (Iₕ), gemessen von der Profilfläche zu der radial äußersten Fläche des Stollens (50), und wobei die Mindeststollenbreite (I_{w}) größer oder gleich der durchschnittlichen radialen Höhe (Iₕ) ist und der Abstand in Umfangsrichtung zwischen der Vorderflanke (52) und der Hinterflanke (54) benachbarter Stollen (50) in jeder Reihe weniger oder gleich 3 mal (I_{w}) beträgt,
**dadurch gekennzeichnet, dass** eine zwischen Mittelpunkten des axial äußeren Endes (51) und des axial inneren Endes (53) gezogene Linie (K) in einem Winkel (β) von weniger als 35° zur axialen Richtung orientiert ist.

2. Reifen nach Anspruch 1, wobei das axial innere Ende (53) jedes Stollens (50) einen von der Vorderflanke (52) vorragenden vergrößerten Stollenkopf (55) aufweist.

3. Reifen nach Anspruch 1 oder 2, wobei jeder Stollen (50) ein sich in Umfangsrichtung erstreckendes axial äußeres Ende (51) und ein geneigtes axial inneres Ende (53), das in einem Winkel bezüglich der Mittelebene orientiert ist, der im Bereich von 30° bis 60° liegt, aufweist.

4. Reifen nach Anspruch 1, wobei die Linie (K) in einem Winkel (β) von 31° orientiert ist.

5. Reifen nach mindestens einem der vorhergehenden Ansprüche, wobei die Reifengröße 30.5L-32 ist und die Gesamtzahl von Stollen (50) sich um den Umfang des Reifens (20) herum auf fünfzig beläuft.

## Revendications

1. Bandage pneumatique (20) pour essieu moteur possédant une carcasse (21) renforcée par au moins une nappe (22) renforcée par des câblés et une bande de roulement (32) possédant plusieurs barrettes de bande de roulement (50), le bandage pneumatique comprenant :
le fait que les barrettes de bande de roulement (50) sont disposées dans deux rangs décalés en direction circonstancielle (50A, 50B), un premier rang (50A) s'étendant depuis un premier épaulement en direction du plan central de la bande de roulement (32), mais sans passer par ledit plan central, un deuxième rang (50B) s'étendant à partir d'un épaulement opposé en direction du plan central de la bande de roulement (32), mais sans passer par ledit plan central, chaque barrette de bande de roulement (50) dudit premier rang (50A) possédant une configuration similaire à celle des barrettes de bande de roulement (50) du deuxième rang (50B) et étant une image spéculaire desdites barrettes ; le fait que chaque barrette (50) possède une largeur minimale (l_{w}) telle qu'on la mesure entre un bord avant (52) et un bord arrière (54) de la barrette (50), une longueur de barrette (l_{w}) telle qu'on la mesure le long de la Médiane de la barrette (50) à mi-distance enture le bord avant (52) et le bord arrière (54), et une hauteur radiale moyenne (lₕ) telle qu'on la mesure à partir de la surface de la profondeur de sculpture jusqu'à la surface de la barrette (50) la plus externe en direction radiale ; et le fait que la largeur de barrette minimale (l_{w}) est supérieure ou égale à la hauteur radiale moyenne (lₕ), la distance circonférentielle s'étendant entre le bord avant (52) et le bord arrière (54) de barrettes adjacentes (50) an sein de chaque rang étant inférieure ou égale à 3 fois (lw), **caractérisé en ce qu'**une ligne (K) tracée entre les centres de l'extrémité externe (58) en direction radiale et l'extrémité interne (53) en direction axiale est orientée en formant un angle (β) qui est inférieur à 35° par rapport à la direction axiale,

2. Bandage pneumatique selon la revendication 1, dans lequel l'extrémité interne (53) de chaque barrette (50) en direction axiale possède une tête de barrette élargie (55) faisant saillie par rapport au bord avant (52).

3. Bandage pneumatique selon la revendication 1 ou 2, dans lequel chaque barrette (50) possède une extrémité externe en direction axiale (51), s'étendant en direction circonférentielle et une extrémité interne inclinée (53) en direction axiale, orientée en formant un angle par rapport au plan central, s'étendant dans la plage de 30° à 60°.

4. Bandage pneumatique selon la revendication 1, dans lequel la ligne (K) est orientée en formant un angle (β) de 31°.

5. Bandage pneumatique selon au moins une des revendications précédentes, dans lequel la dimension du bandage pneumatique est une dimension 30,5L-32 et le nombre total des barrettes (50) s'élève à cinquante autour de la circonférence du bandage pneumatique (20).
